# EUROPEAN PATENT SPECIFICATION

(11) **EP 2 500 260 B1**
(45) Date of publication and mention of the grant of the patent: **17.06.2020**
(21) Application number: 10828118.9
(22) Date of filing: 18.02.2010
(51) Int. Cl.: B63H 5/08, B63B 1/08

(54) **PROPULSION DEVICE FOR SHIP**
ANTRIEBSVORRICHTUNG FÜR SCHIFFE
DISPOSITIF DE PROPULSION POUR NAVIRE

(30) Priority: 09.11.2009 JP 2009255672
(43) Date of publication of application: 19.09.2012
(73) Proprietor: Mitsubishi Shipbuilding Co., Ltd., Yokohama-shi Kanagawa 220-8401 (JP)
(72) Inventor: MATSUMOTO Daisuke, Tokyo 108-8215 (JP)
(74) Representative: Henkel & Partner mbB
(86) International application number: PCT/JP2010/052459
(87) International publication number: WO 2011/055557

(56) References cited:
- JP-A- 49 111 389
- JP-A- 57 077 282
- JP-A- 2007 253 710
- JP-B- 47 037 316
- JP-B1- S 501 077
- JP-U- S 622 499
- JP-U- S63 110 199
- JP-Y1- S4 724 877
- US-A- 1 459
- US-A- 3 991 697
- US-A- 4 550 673
- US-A- 5 558 548

## Description

### Technical Field

The present invention is related to a twin-screw ship.

### Background Art

As an example of a propulsion device of a ship, a one-engine one-axis (one main engine and one screw propeller) system and a two-engine two-axes (two main engines and two screw propellers) system are known. As the propulsion device of a general commercial ship, the 1-engine 1-axis system and the 2-engine 2-axis system are often adopted. The ship which adopts the former is called a single-screw propeller ship, and the ship which adopts latter is called a twin-screw propeller ship.

Also, as the ship becomes larger in size in recent years, problems are caused such as the lowering of propulsive efficiency in accompaniment with the increase of a load to a propeller, and the increase of hull vibration and the occurrence of the erosion in accompaniment with extension of a cavitation range in the single-screw propeller ship. It is known that these problems can be solved by the twin-screw propeller ship. In the twin-screw propeller ship, one propeller loading degree is reduced to improve the propeller efficiency and the occurrence range of the cavitation can be narrowed.

As an example that two propellers are provided at the stern, an overlapping propeller (OLP) type, an interlock propeller type, a two-propeller parallel type and so on are known. In the OLP type of ship, two propellers are arranged to be displaced in a forward or backward direction, such that the two propellers are overlapping each other when viewing from the stern. The promotion efficiency can be improved by 5 - 10% in the OLP type of ship, compared with that of the single-screw propeller ship. Also, in the interlock wing type of ship, the propellers are arranged such that each wing of one screw propeller appears between the wings of the other propeller. In the two-propeller parallel type of ship, the two propellers are arranged symmetrically in parallel to each other in a longitudinal direction of the ship.

When two propellers are provided for the stern structure of the single-screw ship, the two propellers are desirable to be arranged in the hull center or its neighborhood from the viewpoint of the **longitudinal** vortices in the stern such as a slow flow and bilge vortices near the hull centerline. In the stern, the **longitudinal** vortices of the slow flow such as a pair of bilge vortices rotating in an inboard direction are generated in the hull centerline in the position of the propeller of a usual single-screw ship. Because the efficiency of the propeller is higher in the operation in the place where the flow is slow, the propulsion performance can be improved by rotating the propeller near the **longitudinal** vortices to collect the slow flow and the **longitudinal** vortices near the hull centerline. In case of the OLP system, the rotation of the propeller in an outboard direction is often adopted so that the **longitudinal** vortices in the hull center can be collected efficiently to improve the propulsion performance.

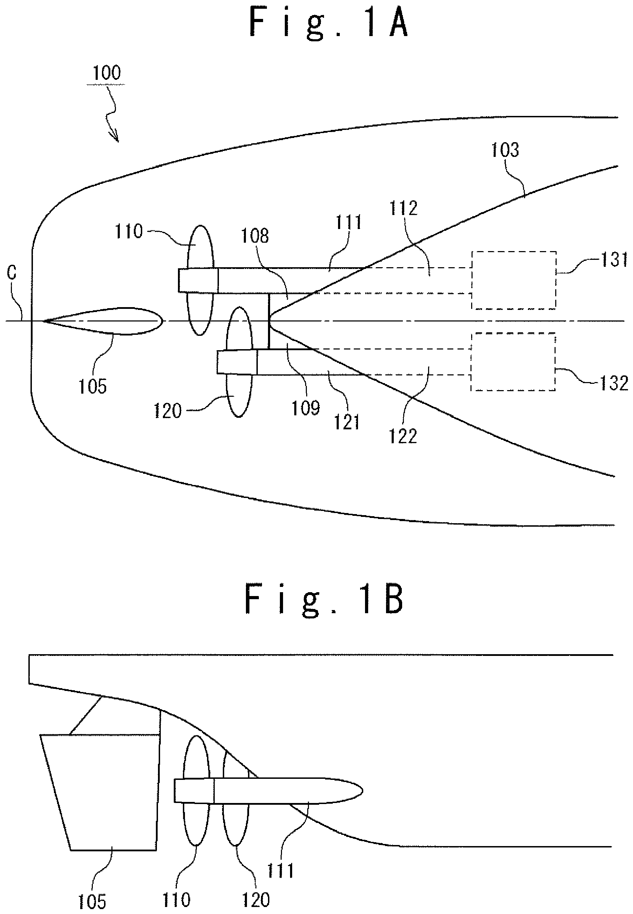

For example, a technique when the OLP system is adopted for the stern structure of the single-screw ship is described in WO 2006/095774 A. FIG. 1A and FIG. 1B are schematic diagrams showing a part of the stern structure of a twin-screw ship shown in WO 2006/095774 A. Here, FIG. 1A is the schematic diagram of the stern structure when viewing the stern of the twin-screw ship from the side of a ship bottom, and FIG. 1B is the schematic diagram of the stern structure when viewing from the side of the ship. Also, in these diagrams, the twin-screw ship 100 has the stern structure of a single-screw ship and is provided with a starboard side propeller 110, a port side propeller 120 and a rudder 105 in the stern. The starboard side propeller 110 is coupled with one end of the starboard side propeller axis 112 which passes through a starboard side stern tube 111. The starboard side propeller axis 112 is coupled with a starboard side main engine 131 in the hull at the other end. The starboard side main engine 131 rotates the starboard side propeller 110 through the starboard side propeller axis 112. Also, the port side propeller 120 is coupled with one end of the port side propeller axis 122 which passes through the port side stern tube 121, like the starboard side propeller 110. The port side propeller axis 122 is coupled with the port side main engine 132 in the hull at the other end. The port side main engine 132 rotates the port side propeller 120 through the port side propeller axis 122. Also, bracket fins 108 and 109 are provided to connect between the starboard side stern tube 111 and stern hull 103 and between the port side stern tube 121 and stern hull 103. Also, the rudder 105 is provided onto the hull centerline C in the backward direction of the starboard side propeller 110 and the port side propeller 120.

US 3991697 A describes a twin-screw ship in which the distance between the propeller axes of the port and starboard side propellers is greater than the diameter of each propeller but not greater than the diameter of each propeller plus the thickness of the rudder. The distance between the propellers is proposed to provide an optimum relation between propulsive efficiency and maneuverability by defining the arrangement relation between the rudder and the propellers.

### Summary of the Invention

However, when using the OLP system, the backward propeller alternately passes a fast flow accelerated by the forward propeller and a slow flow in the neighborhood of the hull center during one rotation. For example, in case of FIG. 1A, the backward propeller 110 alternately passes a fast flow accelerated by the forward portside propeller 120 and a slow flow in the neighborhood of the hull center C during one rotation. Therefore, the load imposed on the propeller wing of the backward propeller changes greatly. As a result, in the twin-screw ship using the OLP system, there is a possibility that the bearing force in the backward propeller axis becomes more excessive, compared with a case of the single-screw ship.

Also, a fast rotation flow is formed newly by the rotation of the forward propeller. Therefore, the backward propeller must operate in a very complicated flow and the propeller cavitation occurrence range will extend necessarily. As a result, there is a fear that excessive vibration occurs. Moreover, the forward propeller itself generates cavitation. For example, it is the chip vortex cavitation which is generated from the propeller wing tip. As the cavitations bursts on the propeller wing surface of the backward propeller, there is a possibility that erosion occurs on the propeller wing.

Therefore, one object of the present invention is to provide a twin-screw ship with a propulsion device, in which propulsion performance can be improved while restraining occurrence such as cavitation and erosion. Also, the ship is to be provided in which it is prevented that bearing force in a propeller axis becomes excessive and the propulsion performance can be improved.

The twin-screw ship according to the present invention includes the features of claim 1
Because the propellers on both sides are arranged in the neighborhood of the hull centerline so that the distance is a predetermined distance (0 ≤ d ≤ 0.5Dp), the **longitudinal** vortices in the neighborhood of a hull center can be efficiently collected to improve the propulsion performance. In addition, because the propellers on the both sides are arranged in parallel to each other, risks such as excessive bearing force in the backward propeller, the cavitation range expansion, and the occurrence of the erosion can be greatly restrained.

In the ship, it is desirable that the port side propeller axis and the starboard side propeller axis are arranged to have a horizontal rake in a range larger than 0 degrees and equal to or smaller than 10 degrees such that a distance between said port side propeller axis and said starboard side propeller axis reduces gradually toward the hull stern.

By arranging the port side propeller axis and the starboard side propeller axis in this way, it is possible to take a large distance between the propeller axes in the neighborhood of ends of the axes of the hull. Thus, the arrangement design of main engines, auxiliary machines and so on can be facilitated.

In the ship, it is desirable that the port side propeller axis and the starboard side propeller axis are arranged to have a vertical rake larger than 0 degrees and equal to or smaller than 10 degrees such that heights of the port side propeller axis and the starboard side propeller axis from a bottom of the ship reduce gradually toward the hull stern.

By arranging the port side propeller axis and the starboard side propeller axis in this way, it is possible to take the great height from the bottom of the ship in the neighborhood of the ends of the propeller axes on the side of the hull. Thus, the arrangement design of the main engines, the auxiliary machines and so on can be facilitated.

In the ship, it is desirable that a central height of said port side propeller and a central height of said starboard side propeller are identical to each other.

It is desirable in the improvement of the directional property and the controllability of the ship that the central height of said port side propeller and the central height of said starboard side propeller are identical to each other.

In the ship, it is desirable that the hull stern has a stern structure of a single-screw ship type.

When the hull stern has the stern structure of the single-screw ship type, the above-mentioned effects can be especially attained.

According to the present invention, the improvement of the propulsion performance becomes possible while restraining the occurrence of the cavitation and the erosion in conjunction with it. Also, the improvement of the propulsion performance becomes possible while preventing that the bearing force of the propeller axis becomes excessive.

### Brief Description of the Drawings

The above subject matters, other objects, the effects and the features of the present invention would become apparent from the description of the embodiments in conjunction with the following drawings:
FIG. 1A is a schematic diagram showing a part of a stern structure of a twin-screw ship described in WO 2006/095774 A;
FIG. 1B is a schematic diagram showing a part of the stern structure of the twin-screw ship described in WO 2006/095774 A;
FIG. 2 is a schematic diagram showing a part of a stern structure of a ship according to a first embodiment of the present invention;
FIG. 3 is a graph showing a relation between an inter-propeller-tip distance d and propulsion performance of the ship according to the first embodiment of the present invention;
FIG. 4 is a conceptual diagram schematically showing a relation between the propellers and the vortices;
FIG. 5 is a schematic diagram showing a part of the stern structure of the ship according to a second embodiment by the present invention; and
FIG. 6 is a schematic diagram showing a part of the stern structure of the ship according to a third embodiment of the present invention.

### Description of Embodiments

Hereinafter, a propulsion device and a ship using the same according to the present invention will be described with reference to the attached drawings.

### [First Embodiment]

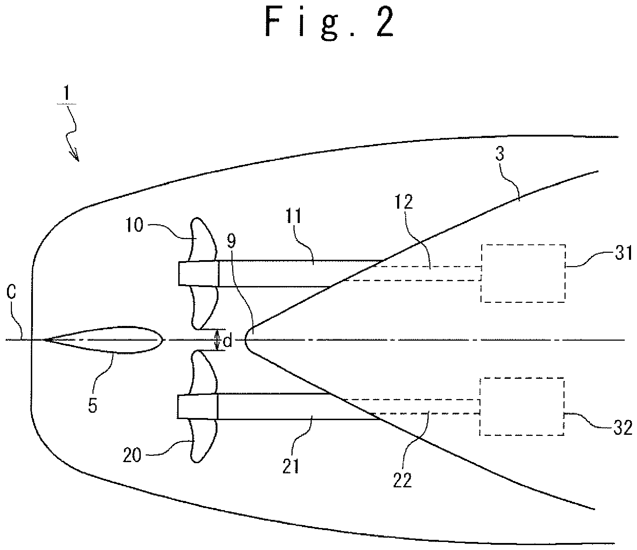

First, a stern structure of a ship according to a first embodiment of the present invention will be described. FIG. 2 is a schematic diagram showing the stern structure of the ship according to the first embodiment of the present invention. However, FIG. 2 is the schematic diagram when viewing the stern structure of the ship from the side of a ship bottom. Here, the twin-screw ship 1 having the stern structure of a single-screw ship type as a kind of a multi-screw ship as the ship will be described as an example. As shown in FIG. 2, the twin-screw ship 1 is provided with a starboard side screw propeller 10, a starboard side screw axis tube 11, a port side screw propeller 20, a port side screw axis tube 21 and a rudder 5.

The starboard side screw propeller 10 is provided on the starboard side of the stern hull 3 which is a lower part of the stern of the hull. The starboard side screw propeller 10 is connected with one end of a starboard side screw axis 12 which is inserted into the starboard side screw axis tube 11. The starboard side screw axis 12 is connected with a starboard side main engine 31 in the hull at the other end. The starboard side main engine 31 rotates the starboard side screw propeller 10 through the starboard side screw axis 12. Also, in the same way, the port side screw propeller 20 is provided on the port side of the stern hull 3. The port side screw propeller 20 is connected with one end of a port side screw axis 22 which is inserted into the port side screw axis tube 21. The port side screw axis 22 is connected with a port side main engine 32 in the hull at the other end. The port side main engine 32 rotates the port side screw propeller 20 through the port side screw axis 22.

However, the starboard side screw axis tube 11 and the port side screw axis tube 21 are external tubes (pipes) to protect the starboard side screw axis 12 and the port side screw axis 22, respectively and they are exemplified by stern tubes.

The rudder 5 is provided onto a hull centerline C backwardly from the starboard side screw propeller 10 and the port side screw propeller 20.

The propellers 20 and 10 at the both sides are arranged in the neighborhood of the hull centerline C to be in symmetry with respect to the hull centerline C and to be apart from each other by a distance between the propellers not to interfere mutually. It is supposed that the distance is shown by an inter-propeller-tip distance d. The inter-propeller-tip distance d is a distance between the tip of a propeller wing of the starboard side screw propeller 10 and the tip of a propeller wing of the port side screw propeller 20 (a distance between a circle drawn by the tip of the propeller wing of the starboard side screw propeller 10 through the rotation of the starboard side screw propeller 10 and a circle drawn by the tip of the propeller wing of the port side screw propeller 20 through the rotation of the port side screw propeller 20). In this case, it is desirable that the inter-propeller-tip distance d is set to be small in the neighborhood of the hull centerline C to avoid the contact of the propeller wings and to catch a low-speed flow. Specifically, it is determined as follows.

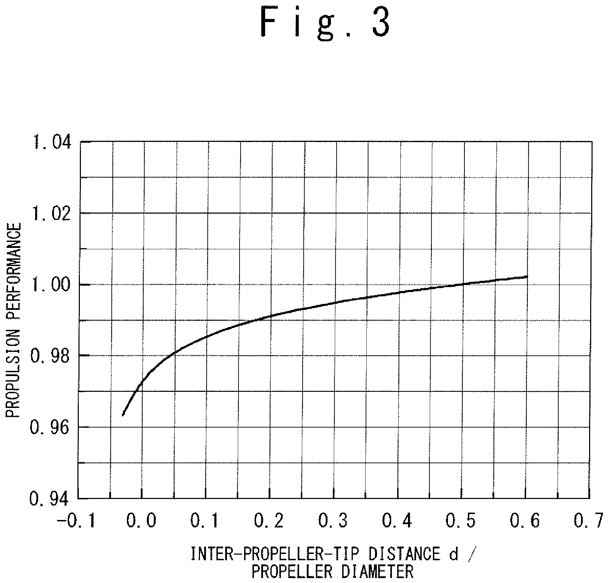

First, an upper limit of the inter-propeller-tip distance d is determined as follows. FIG. 3 is a graph showing a relation between the inter-propeller-tip distance d and the propulsion performance of the ship according to the first embodiment of the present. The horizontal axis shows a value of (inter-propeller-tip distance d) / (propeller diameter Dp). Here, the diameter of the starboard side screw propeller 10 and the diameter of the port side screw propeller 20 are both equal to the propeller diameter Dp. The vertical axis is the propulsion performance of the ship and shows a value when the propulsion performance is normalized based on the value of 1.0 in a case of the single-screw ship of the same stern hull 3 (the single-screw ship type). Here, the propulsion performance is horsepower performance, and the performance is better when the horsepower which is necessary to attain the same speed is smaller, i.e. the mileage performance is good. Therefore, it is shown that the propulsion performance becomes better as the value becomes smaller, and the propulsion performance becomes worse as the value becomes larger. In order to improve the propulsion performance, comparing with the single-screw ship, the propulsion performance must be decreased to a value equal to or less than 1.0. Therefore, as seen from this graph, it is necessary to set the ratio value of (the inter-propeller-tip distance d on both sides) / (propeller diameter Dp) to be equal to or less than 0.5. It is desirable because the propulsion performance is improved more when the ratio value of (the inter-propeller-tip distance d on both sides) / (propeller diameter Dp) becomes smaller. That is, the ratio value is desirably equal to or less than 0.3, more desirably equal to or less than 0.2, and further desirably equal to or less than 0.1. This reason is in that the propulsion performance can be more improved by catching a low-speed flow near the hull centerline C, as mentioned previously.

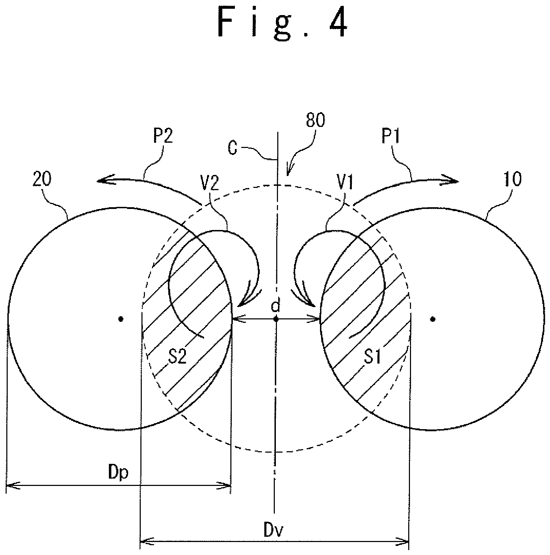

For example, this will be described as follows. FIG. 4 is a conceptual diagram schematically showing a relation between the propellers and the vortices. In FIG. 4, **longitudinal** vortices V2 and V1 of low-speed flows are generated in an area 80 in the neighborhood of ship centerline C. It is supposed that the diameter of this area 80 is Dv. It is supposed that the rotation directions of the propellers 20 and 10 at the both side of the twin-screw ship are outboard directions P2 and P1, in order to collect **longitudinal** vortices V2 and V1 in this area 80 efficiently so as to improve the propulsion performance.

Here, thinking about the single-screw ship, the propellers can collect these **longitudinal** vortices V2 and V1 comparatively efficiently because they are arranged in this area 80. However, generally, the propeller of the single-screw ship can collect the **longitudinal** vortex in the right half side but cannot collect the **longitudinal** vortex in the left half side, depending on the rotation direction of the propeller, for example.

On the other hand, thinking about the twin-screw ship, the propellers 20 and 10 on both sides can collect the **longitudinal** vortices efficiently in the areas S2 and S1 which overlap with the area 80. Because a summation of the area S2 and the area S1 becomes larger as the inter-propeller-tip distance d becomes smaller, the propulsion performance can be further improved.

On the other hand, a minimum value of the inter-propeller-tip distance d is determined as follows. As shown in FIG. 3, the propulsion performance is further improved as the inter-propeller-tip distance d becomes smaller. When the inter-propeller-tip distance d between the propellers on both sides becomes less than 0 (negative), the following problem occurs. First, in case of an interlock propeller system, because there is a problem of interference between the propeller wings, a rotation control becomes difficult. In addition, there would be difficulty in the view of safety and reliability. Also, in case of the OLP system, as described previously, there would be a possibility that the bearing force becomes excessive and a possibility that a cavitation generation range extends so that erosion occurs at, especially, the backward propeller. From the above situations, when the inter-propeller-tip distance d is less than 0, the propulsion performance can be improved (FIG. 3). However, because the above problems occur, it is not desirable in the navigation of the ship. Therefore, it is desirable that the minimum value of the inter-propeller-tip distance d is 0. That is, the minimum value of the ratio value of (the inter-propeller-tip distance d)/ (propeller diameter Dp) is desirable to be "0".

From the above, a range of the ratio value of (the inter-propeller-tip distance d) / (propeller diameter Dp) is from 0 to 0.5. The range is desirably from 0 to 0.3, more desirably, from 0 to 0.2, and further more desirably, from 0 to 0.1. That is, it is 0 ≤ d ≤ 0.5Dp, desirably, 0 ≤ d ≤ 0.3Dp, more desirably, 0 ≤ d ≤ 0.2Dp, and further more desirably, 0 ≤ d ≤ 0.1Dp.

Also, the positions of the propellers 20 and 10 in the longitudinal direction of the ship are not required to be same, unlike FIG. 2. However, it is desirable to be in the same position, considering the controllability of twin-screw ship 1. In the same way, the central height of the propellers 20 and 10 are not required to be same. However, considering the controllability of the twin-screw ship 1, it is desirable that the longitudinal positions are same.

Also, the position of a tip 9 of the stern structure 3 which is provided in the same height as the propellers 20 and 10 is located on the bow side, compared with the ends on the bow side of the rotation planes of the propellers 20 and 10. The reason is in that the slow flow (**longitudinal** vortices) centers on the neighborhood of the ship center and they can be easily collected.

As described above, in the present embodiment, the propellers 20 and 10 are provided in the neighborhood of the hull centerline C so as to collect the **longitudinal** vortices in the neighborhood of the hull center efficiently so that the propulsion performance can be improved. At this time, because the propellers 20 and 10 do not overlap in the back view, the risks such as the excessiveness of bearing force in the backward screw in the OLP extension of a cavitation range, and the occurrence of erosion can be substantially restrained. Thus, the twin-screw ship 1 can be easily manufactured.

### [Second Embodiment]

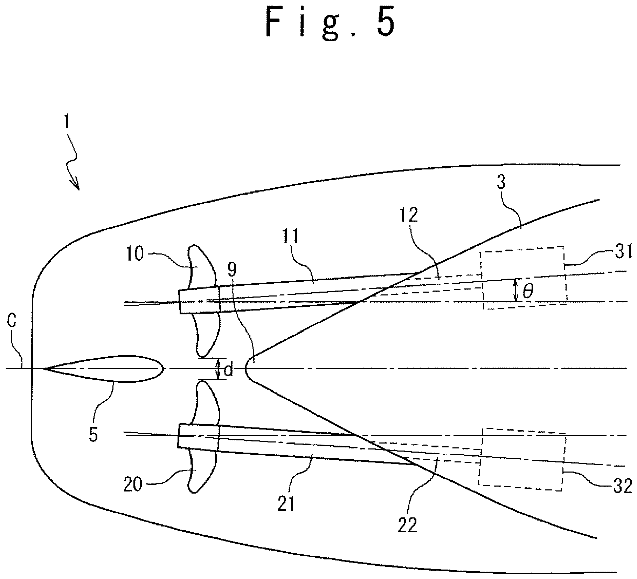

Next, the stern structure of the ship according to a second embodiment of the present invention will be described. FIG. 5 is a schematic diagram showing a part of the stern structure of the ship according to the second embodiment of the present invention. Here, FIG. 5 is the schematic diagram when the stern structure of the ship is viewed from the side of the bottom of the ship. The present embodiment is different from the first embodiment in that the propeller axes 22 and 12 (propeller axis tubes 21 and 11) are not parallel to the direction of the hull centerline C.

That is, the propeller axes 22 and 12 (propeller axis tubes 21 and 11) and the main engines 32 and 31 are arranged to have a horizontal rake so that the distance between the propeller axes reduces gradually toward the hull stern. Specifically, the starboard side propeller axis 12, the starboard side propeller axis tube 11 and the starboard side main engine 31 are arranged such that an angle θ between the starboard side propeller axis 12 (the starboard side propeller axis tube 11) and the hull centerline C is larger than 0 degrees and equal to or smaller than 10 degrees, as shown in FIG. 5. In the same way, the port side propeller axis 22, the port side propeller axis tube 21 and the port side main engine 32 are arranged such that an angle 0 between the port side propeller axis 22 (the port side propeller axis tube 21) and the hull centerline C is larger than 0 degrees and equal to or smaller than 10 degrees. Therefore, the angle (2θ) between the starboard side propeller axis 12 (the starboard side propeller axis tube 11) and the port side propeller axis 22 (the port side propeller axis tube 21) is larger than 0 degrees and equal to or small than 20 degrees. Here, the reason why the angle θ is set to be equal to or smaller than 10 degrees is in that, when the angle is larger than 10 degrees, the angle of the propeller axis 22 or 12 becomes steep too much so as to give an influence on the controllability of the twin-screw ship 1 and it becomes difficult to install the main engine 32 or 31.

Because the other structure is same as that of the first embodiment, the description is omitted.

As described above, in the present embodiment, the propeller axes 22 and 12 (propeller axis tubes 21 and 11) and the main engines 32 and 31 are arranged to have a horizontal rake so that the distance between the propeller axes reduces gradually toward the hull stern. That is, the distance between the propeller axes 22 and 12 can be made large in the end portions of the propeller axes 22 and 12 on the hull side. Thus, the horizontal distance between the main engines 32 and 31 can be increased. As a result, the arrangement design of the port side main engine 32, the starboard side main engine 31 and auxiliary machines (not illustrated) can be made easy. Also, in the same way, it is possible to attain the advantages in the first embodiment.

### [Third Embodiment]

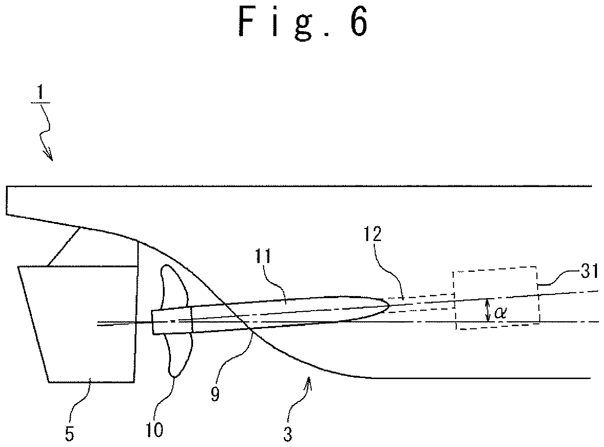

Next, the stern structure of the ship according to a third embodiment of the present invention will be described. FIG. 6 is a schematic diagram showing a part of the stern structure of the ship according to the third embodiment of the present invention. Here, FIG. 6 is the schematic diagram when the stern structure of the ship is viewed from the side of the ship. The present embodiment is different from the first embodiment in that the propeller axes 22 and 12 (propeller axis tubes 21 and 11) are not parallel to the horizontal direction.

That is, the propeller axes 22 and 12 (propeller axis tubes 21 and 11) and the main engines 32 and 31 are arranged to have a vertical rake so that the heights of the propeller axes from the bottom of the ship reduce toward the hull stern. Specifically, the starboard side propeller axis 12, the starboard side propeller axis tube 11 and the starboard side main engine 31 are arranged such that an angle α between the starboard side propeller axis 12 (the starboard side propeller axis tube 11) and the horizontal direction is larger than 0 degrees and equal to or smaller than 10 degrees, as shown in FIG. 6. In the same way, the port side propeller axis 22, the port side propeller axis tube 21 and the port side main engine 32 are arranged such that an angle α between the port side propeller axis 22 (the port side propeller axis tube 21) and the horizontal direction is larger than 0 degrees and equal to or smaller than 10 degrees. Here, the reason why the angle α is equal to or smaller than 10 degrees is in that when the angle is larger than 10 degrees, the angle between the propeller axis 22 or 12 becomes steep too much so as to give an influence on the controllability of the twin-screw ship 1, and to be difficult to install the main engines 32 and 31.

The other structure is same as that of the first embodiment, and the description is omitted.

As described above, the propeller axes 22 and 12 (propeller axis tubes 21 and 11) and the main engines 32 and 31 are arranged to have a vertical rake so that the heights of the propeller axes from the bottom of the ship reduce toward the hull stern. That bottom of the ship reduce toward the hull stern. That is, the height from the bottom of the ship can be set to be high, in the end portions of the propeller axes 22 and 12 on the hull side. Thus, the vertical distances of the main engines 32 and 31 from the bottom of the ship can be increased. As a result, the arrangement design of the port side main engine 32, the starboard side main engine 31 and the auxiliary machines can be made easy. Also, in the same way, it is possible to attain the same advantages as the first embodiment.

It should be noted that the techniques in the embodiments of the present invention can be combined in a range of no contradiction. For example, it is possible to adopt a combination of the horizontal rake in the second embodiment and the vertical rake in the third embodiment. In this case, the advantages in the first to third embodiments can be attained at the same time.

## Claims

1. A twin-screw ship (1), comprising:
a hull with a stern structure (3) having a tip (9) thereof oriented towards the stern located on a hull centerline (C);
a port side propeller (20);
a starboard side propeller (10);
a rudder (5) provided on the hull centerline (C) backwardly from the port and starboard side propellers (20,10);
a port side propeller axis (22) provided to extend backwardly from the stern structure (3) and connected at one end with said port side propeller (20) and at the other end with a port side main engine (32) in the hull; and
a starboard side propeller axis (12) provided to extend backwardly from the stern structure (3) and connected at one end with said starboard side propeller (10) and at the other end with a starboard side main engine (31) in the hull,
wherein said port and starboard side propellers (20,10), when the stern structure (3) of the ship (1) is viewed from the side of the bottom of the ship (1), are arranged on the sides of the hull centerline (C) in symmetry with respect to the hull centerline (C) and to be apart from each other by an inter-propeller-tip distance d which satisfies 0 ≤ d ≤ 0.5Dp, where Dp is the propeller diameter of said port and starboard side propellers (20,10),
wherein the position of the tip (9) of the stern structure (3) which is provided at the same height as said port and starboard side propellers (20,10) is located on the bow side compared with the ends on the bow side of the rotation planes of said port and starboard side propellers (20,10), **characterised in that** said port and starboard side propellers (20,10) are configured to respectively rotate in outboard directions (P2,P1) in order to collect longitudinal vortices (V2,V1) of low-speed flows respectively rotating in inboard directions and generated in the neighborhood of the ship centerline (C) to improve the propulsion performance, and
**in that** said port side propeller axis (22) is inserted into a port side propeller axis tube (21) and said starboard side propeller axis (12) is inserted into a starboard side propeller axis tube (11), and said starboard and port side propeller axis tubes (11,21) are external straight cylindrical pipes protruding from the stern structure (3) towards the stern to protect the port and starboard side propeller axis (22,12), respectively.

2. The twin-screw ship (1) according to claim 1, wherein said port side propeller axis (22) and said starboard side propeller axis (12) are arranged to have, when the stern structure (3) of the ship (1) is viewed from the side of the bottom of the ship (1), a horizontal angle (θ) with respect to the direction of a hull centerline (C) which is larger than 0 degrees and equal to or smaller than 10 degrees such that a distance between said port side propeller axis (22) and said starboard side propeller axis (12) reduces gradually toward the stern structure (3).

3. The twin-screw ship (1) according to claim 1 or 2, wherein said port side propeller axis (22) and said starboard side propeller axis (12) are arranged to have, when the stern structure (3) of the ship (1) is viewed from the side of the ship (1), a vertical angle (α) with respect to the horizontal direction which is larger than 0 degrees and equal to or smaller than 10 degrees such that height positions of said port side propeller axis (22) and said starboard side propeller axis (12) from the bottom of the ship reduce gradually toward the stern structure (3).

4. The twin-screw ship (1) according to any one of claims 1 to 3, wherein, when the stern structure (3) of the ship (1) is viewed from the side of the ship (1), a height position of a center of said port side propeller (20) and a height position of a center of said starboard side propeller (10) are identical to each other.

5. The twin-screw ship (1) according to any one of claims 1 to 4, wherein the inter-propeller-tip distance d satisfies 0 ≤ d ≤ 0.3Dp.

6. The twin-screw ship (1) according to claim 5, wherein the inter-propeller-tip distance d satisfies 0 ≤ d ≤ 0.2Dp.

7. The twin-screw ship (1) according to claim 6, wherein the inter-propeller-tip distance d satisfies 0 ≤ d ≤ 0.1Dp.

## Patentansprüche

1. Ein Doppelschrauben-Schiff (1) mit:
einem Rumpf mit einer Heckstruktur (3), die eine Spitze (9) davon, die zu dem Heck gerichtet ist, auf einer Rumpf-Mittellinie (C) angeordnet hat,
einem backbordseitigen Propeller (20),
einem steuerbordseitigen Propeller (10),
einem Ruder (5), das an der Rumpf-Mittellinie (C) hinter den backbord- und steuerbordseitigen Propellern (20,10) vorgesehen ist,
einer backbordseitigen Propellerachse (22), die vorgesehen ist, um sich von der Heckstruktur (3) nach hinten zu erstrecken, und die an einem Ende mit dem backbordseitigen Propeller (20) und an dem anderen Ende mit einer backbordseitigen Haupt-Antriebsmaschine (32) in dem Rumpf verbunden ist, und
einer steuerbordseitigen Propellerachse (12), die vorgesehen ist, um sich von der Heckstruktur (3) nach hinten zu erstrecken, und die an einem Ende mit dem steuerbordseitigen Propeller (10) und an dem anderen Ende mit einer steuerbordseitigen Haupt-Antriebsmaschine (31) in dem Rumpf verbunden ist,
wobei die backbord- und steuerbordseitigen Propeller (20,10), wenn die Heckstruktur (3) des Schiffs (1) von der Seite des Bodens des Schiffs (1) betrachtet wird, an den Seiten der Rumpf-Mittellinie (C) symmetrisch bezüglich der Rumpf-Mittellinie (C) und voneinander entfernt um einen Zwischenpropeller-Außenendabstand d angeordnet sind, der 0 ≤ d ≤ 0.5Dp erfüllt, wobei Dp der Propellerdurchmesser der backbord- und steuerbordseitigen Propeller (20,10) ist,
wobei die Position der Spitze (9) der Heckstruktur (3), die an derselben Höhe wie die backbord- und steuerbordseitigen Propeller (20,10) vorgesehen ist, sich weiter an der Bugseite im Vergleich zu den Enden an der Bugseite der Rotationsebenen der backbord- und steuerbordseitigen Propeller (20,10) befindet,
**dadurch gekennzeichnet, dass**
die backbord- und steuerbordseitigen Propeller (20,10) konfiguriert sind, um jeweils in Außenbordrichtungen (P2,P1) zu rotieren, um Längswirbel (V2,V1) von Niedergeschwindigkeitsströmungen einzufangen, die jeweils in Binnenbordrichtungen rotieren und die in der Nachbarschaft der Schiff-Mittellinie (C) erzeugt werden, um die Vortriebsleistung zu verbessern, und
dadurch, dass die backbordseitige Propellerachse (22) in ein backbordseitiges Propellerachsenrohr (21) und die steuerbordseitige Propellerachse (12) in ein steuerbordseitiges Propellerachsenrohr (11) eingesetzt ist, und die steuerbord- und backbordseitigen Propellerachsenrohre (11,21) externe gerade zylindrische Rohre sind, die von der Heckstruktur (3) zu dem Heck vorstehen, um die backbord- und steuerbordseitigen Propellerachse (22,12) jeweils zu schützen.

2. Das Doppelschrauben-Schiff (1) gemäß Anspruch 1, wobei die backbordseitige Propellerachse (22) und die steuerbordseitige Propellerachse (12) angeordnet sind, um, wenn die Heckstruktur (3) des Schiffs (1) von der Seite des Bodens des Schiffs (1) betrachtet wird, einen horizontalen Winkel (θ) bezüglich der Richtung der Rumpf-Mittellinie (C) zu haben, der größer als 0° und gleich oder kleiner als 10° ist, derart, dass eine Distanz zwischen der backbordseitigen Propellerachse (22) und der steuerbordseitigen Propellerachse (12) zu der Heckstruktur (3) hin allmählich abnimmt.

3. Das Doppelschrauben-Schiff (1) gemäß Anspruch 1 oder 2, wobei die backbordseitige Propellerachse (22) und die steuerbordseitige Propellerachse (12) angeordnet sind, um, wenn die Heckstruktur (3) des Schiffs (1) von der Seite des Schiffs (1) betrachtet wird, einen vertikalen Winkel (α) bezüglich der Horizontalrichtung zu haben, der größer als 0° und gleich oder kleiner als 10° ist, derart, dass Höhenpositionen der backbordseitigen Propellerachse (22) und der steuerbordseitigen Propellerachse (12) von dem Boden des Schiffs zu der Heckstruktur (3) allmählich abnehmen.

4. Das Doppelschrauben-Schiff (1) gemäß einem der Ansprüche 1 bis 3, wobei, wenn die Heckstruktur (3) des Schiffs (1) von der Seite des Schiffs (1) betrachtet wird, eine Höhenposition einer Mitte des backbordseitigen Propellers (20) und eine Höhenposition einer Mitte des steuerbordseitigen Propellers (10) identisch zueinander sind.

5. Das Doppelschrauben-Schiff (1) gemäß einem der Ansprüche 1 bis 4, wobei der Zwischenpropeller-Außenendabstand d 0 ≤ d ≤ 0,3Dp erfüllt.

6. Das Doppelschrauben-Schiff (1) gemäß Anspruch 5, wobei der Zwischenpropeller-Außenendabstand d 0 ≤ d ≤ 0,2Dp erfüllt.

7. Das Doppelschrauben-Schiff (1) gemäß Anspruch 6, wobei der Zwischenpropeller-Außenendabstand d 0 ≤ d ≤ 0,1Dp erfüllt.

## Revendications

1. Bateau (1) à deux hélices, comprenant :
une coque ayant une structure (3) de poupe ayant sa pointe (9) orientée vers la poupe située sur une ligne (C) centrale de la coque,
une hélice (20) de bâbord ;
une hélice (10) de tribord ;
un gouvernail (5) prévu sur la ligne (C) centrale de la coque en arrière des hélices (20, 10) de bâbord et de tribord ;
un axe (22) de l'hélice de bâbord prévu pour s'étendre en arrière de la structure (3) de poupe et relié à une extrémité à l'hélice (20) de bâbord et à l'autre extrémité à un moteur (32) principal de bâbord dans la coque ; et
un axe (12) d'hélice de tribord prévu pour s'étendre en arrière de la structure (3) de poupe et relié à une extrémité à l'hélice (10) de tribord et à l'autre extrémité à un moteur (31) principal de tribord dans la coque,
dans lequel les hélices (20, 10) de bâbord et de tribord sont, lorsque la structure (3) de poupe du bateau (1) est vue du côté du fond du bateau (1), disposées sur les côtés de la ligne (C) centrale de la coque de manière symétrique par rapport à la ligne (C) centrale de la coque et en étant séparées l'une de l'autre par une distance d entre les pointes d'hélice qui satisfait 0 ≤ d ≤ 0.5Dp, Dp étant le diamètre d'hélice des hélices (20, 10) de bâbord et de tribord,
dans lequel la position de la pointe (9) de la structure (3) de poupe, qui est prévue à la même hauteur que les hélices (20, 10) de bâbord et de tribord, est placée du côté de la proue par rapport aux extrémités du côté de la proue des plans de rotation des hélices (20, 10) de bâbord et de tribord,
**caractérisé en ce que** les hélices (20, 10) de bâbord et de tribord sont configurées pour tourner, respectivement, dans des directions (P2, P1) hors bord, afin de collecter des tourbillons (V2, V1) longitudinaux de courants à vitesse petite tournant, respectivement, dans des directions en dedans du bord et produits au voisinage de la ligne (C) centrale du bateau, afin d'améliorer la performance de propulsion, et
**en ce que** l'axe (22) de l'hélice de bâbord est inséré dans un tube (21) d'axe d'hélice de bâbord et l'axe (12) d'hélice de tribord est inséré dans un tube (11) d'axe d'hélice de tribord, et les tubes (11, 21) d'hélice de tribord et de bâbord sont des tuyaux extérieurs cylindriques droits s'étendant de la structure (3) de poupe vers la poupe pour protéger, respectivement, les axes (22, 12) d'hélice de bâbord et de tribord.

2. Bateau (1) à deux hélices suivant la revendication 1, dans lequel l'axe (22) d'hélice de bâbord et l'axe (12) d'hélice de tribord sont disposés de manière à avoir, lorsque la structure (3) de poupe du bateau (1) est vue à partir du côté du fond du bateau (1), un angle (θ) horizontal avec la direction d'une ligne (C) centrale de la coque qui est plus grand que 0 degré et inférieur ou égal à 10 degrés, de façon à ce qu'une distance entre l'axe (22) de l'hélice de bâbord et l'axe (12) de l'hélice de tribord se réduise graduellement vers la structure (3) de poupe.

3. Bateau (1) à deux hélices suivant la revendication 1 ou 2, dans lequel l'axe (22) de l'hélice de bâbord et l'axe (12) de l'hélice de tribord sont disposés à avoir, lorsque la structure (3) de poupe du bateau (1) est vue à partir du côté du bateau (1), un angle (α) vertical avec la direction horizontale qui est plus grand que 0 degré et inférieur ou égal à 10 degrés, de façon à ce que des positions en hauteur de l'axe (22) de l'hélice de bâbord et de l'axe (12) de l'hélice de tribord, à partir du fond du bateau, se réduisent graduellement vers la structure (3) de poupe.

4. Bateau (1) à deux hélices suivant l'une quelconque des revendications 1 à 3, dans lequel, lorsque la structure (3) de poupe du bateau (1) est vue à partir du côté du bateau (1), une position en hauteur d'un centre de l'hélice (20) de bâbord et une position en hauteur d'un centre de l'hélice (10) de tribord sont les mêmes.

5. Bateau (1) à deux hélices suivant l'une quelconque des revendications 1 à 4, dans lequel la distance d entre les pointes d'hélice satisfait 0 ≤ d ≤ 0,3Dp.

6. Bateau (1) à deux hélices suivant la revendication 5, dans lequel la distance d entre les pointes d'hélice satisfait 0 ≤ d ≤0,2Dp.

7. Bateau (1) à deux hélices suivant la revendication 6, dans lequel la distance d entre les pointes d'hélice satisfait 0 ≤ d ≤0,1Dp.
